# EUROPEAN PATENT APPLICATION

(11) **EP 4 456 213 A1**
(43) Date of publication of application: **30.10.2024**
(21) Application number: 23461565.6
(22) Date of filing: 26.04.2023
(51) Int. Cl.: H01M 8/04014, H01M 8/04089, H01M 8/04111

(54) **POWER GENERATION SYSTEM**

(71) Applicant: Hamilton Sundstrand Corporation, Charlotte, NC 28217 (US)
(72) Inventor: Kruczek, Grzegorz, 44-100 Gliwice (PL)
(74) Representative: Dehns

(57) **Abstract**

A power generation system for an aircraft, the power generation system comprising: a hydrogen fuel cell comprising a fuel cell hydrogen inlet and a fuel cell hydrogen outlet; and a hydrogen recirculation system configured to recirculate recirculation hydrogen from the fuel cell hydrogen outlet to the fuel cell hydrogen inlet.

## Description

### FIELD OF THE INVENTION

This application relates to a power generation system for an aircraft, an aircraft and a method.

### BACKGROUND

In order to reduce aircraft emissions hydrogen fuel cells are used to generate energy for aircraft electrical power consuming devices. It is desirable to increase the energy efficiency of hydrogen fuel cells and their supporting systems.

### SUMMARY

In a first aspect of the invention, there is provided a power generation system for an aircraft, the power generation system comprising: a hydrogen fuel cell comprising a fuel cell hydrogen inlet and a fuel cell hydrogen outlet; and a hydrogen recirculation system configured to recirculate recirculation hydrogen from the fuel cell hydrogen outlet to the fuel cell hydrogen inlet.

Recirculating the hydrogen from the fuel cell out to the fuel cell hydrogen inlet may improve the efficiency of the power generation system.

In an example, the hydrogen recirculation system comprises a mixer, wherein the mixer is configured to mix the recirculation hydrogen with input hydrogen from a hydrogen supply to produce mixed hydrogen, the mixer configured to supply the mixed hydrogen to the fuel cell hydrogen inlet.

In an example, the recirculation system comprises a recirculation heat exchanger configured to cool the recirculation hydrogen.

In an example, the recirculation heat exchanger is configured to use input hydrogen from a hydrogen supply to cool the recirculation hydrogen.

In an example, the power generation system comprises a blower, wherein the blower is configured to increase a pressure of the recirculation hydrogen.

In an example, the blower is downstream of the heat exchanger.

In an example, the power generation system comprises an air supply system configured to supply air to the hydrogen fuel cell.

In an example, the air supply system comprises a compressor configured to compress the air.

In an example, the air supply system is configured to supply more than a stoichiometric requirement of air to the hydrogen fuel cell.

In an example, the air supply system comprises an air-fuel heat exchanger, the air-fuel heat exchanger configured to use air to heat input hydrogen.

In an example, the power generation system comprises a turbine, the turbine configured to generate work from air received from the hydrogen fuel cell.

In an example, the power generation system comprises a coolant system, the coolant system configured to cool the hydrogen fuel cell.

In an example, the coolant system comprises a coolant heat exchanger, the coolant heat exchanger configured to heat input hydrogen.

In an example, the power generation system is configured to use exhaust air from the hydrogen fuel cell to produce thrust.

According to a second aspect, there is provided an aircraft comprising the power generation system.

According to a third aspect, there is provided a method of generating power in an aircraft, the method comprising recirculating recirculation hydrogen from a fuel cell hydrogen outlet to a fuel cell hydrogen inlet.

The aircraft of the second aspect may comprise any of the features described with respect to the first aspect. The method of the third aspect may include any functional steps described in relation to the first and/or second aspects.

### BRIEF DESCRIPTION OF THE DRAWINGS

Various examples will now be described with reference to the accompanying drawings in which:

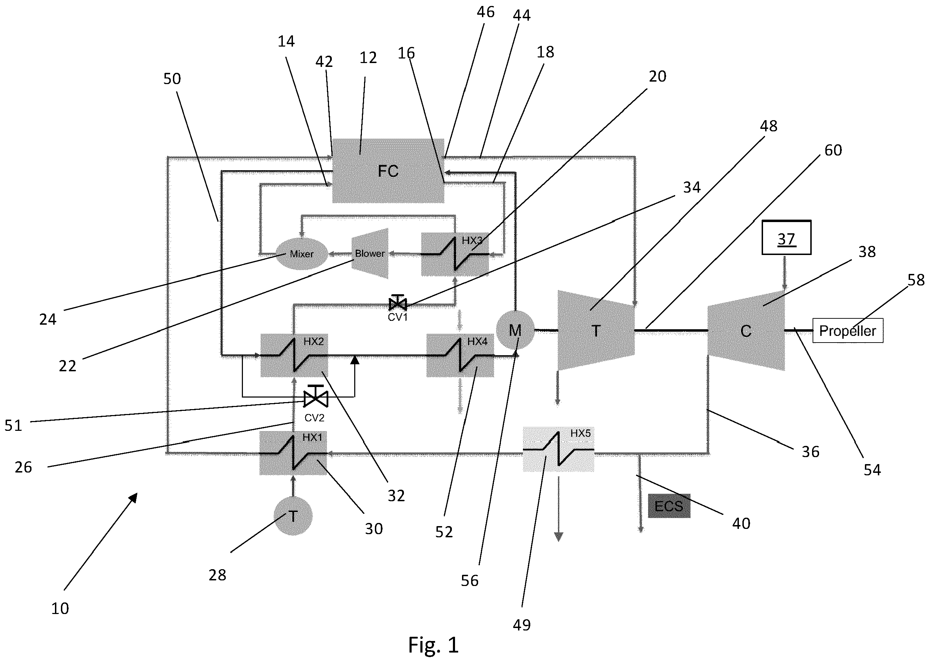

Figure 1 shows a process flow diagram of a power generation system for an aircraft.

### DETAILED DESCRIPTION

Fig. 1 shows a power generation system 10 for an aircraft (not shown).

The power generation system 10 comprises a hydrogen fuel cell 12. The hydrogen fuel cell 12 comprises a fuel cell hydrogen inlet 14 and a fuel cell hydrogen outlet 16.

The power generation system 10 comprises a hydrogen recirculation system 18. The hydrogen recirculation system 18 connects the fuel cell hydrogen outlet 16 to the fuel cell hydrogen inlet 14. The hydrogen recirculation system 18 comprises a recirculation heat exchanger 20, a blower 22 and a mixer 24, which are connected in series between the fuel cell hydrogen outlet 16 and the fuel cell hydrogen inlet 14.

The power generation system 10 comprises a hydrogen supply 26. The hydrogen supply 26 comprises a hydrogen tank 28, an air-fuel heat exchanger 30, a coolant-hydrogen heat exchanger 32, and a control valve 34. The hydrogen supply 26 passes through the air-fuel heat exchanger 30, the coolant-hydrogen heat exchanger 32 and the recirculation heat exchanger 20 before reaching the mixer 24.

The power generation system 10 comprises an air supply system 36. The air supply system 36 comprises an air supply 37, a compressor 38 and an environmental control system outlet 40. The air supply system 36 connects to a fuel cell air inlet 42 of the fuel cell 12. The air supply 37 may be configured to provide ram air and/or engine bleed air.

The power generation system 10 comprises an air exhaust system 44. The air exhaust system 44 connects to a fuel cell air outlet 46 of the fuel cell 12. The air exhaust system 44 comprises a turbine 48. The air exhaust system 44 comprises an exhaust heat exchanger 49.

The power generation system 10 comprises a coolant system 50. The coolant system 50 is configured to recirculate coolant through the fuel cell 12. The coolant system 50 comprises a coolant heat exchanger 52.

The coolant system 50 is configured to pass coolant through the coolant-hydrogen heat exchanger 32. The coolant system 50 comprises a coolant control valve 51, which is configured to control the amount of coolant passing through the coolant-hydrogen heat exchanger 32. This allows the temperature of the hydrogen from the hydrogen supply 26 reaching the mixer 24 to be controlled.

The power generation system comprises a drive system 54. The drive system 54 comprises a motor 56, a propeller 58 and a mechanical linkage 60. The mechanical linkage 60 mechanically links the motor 56 to the propeller 58. The mechanical linkage 60 further mechanically links the turbine 48 to the motor 56 and the propeller 58. The mechanical linkage 60 further mechanically links the compressor 38 to the motor 56, the compressor 38, the turbine 48 and the propeller 58. The mechanical linkage 60 comprises a shaft.

In use, the hydrogen supply 26 passes hydrogen (initially liquid hydrogen as stored in the hydrogen tank 28) from the hydrogen tank 28 through the air-fuel heat exchanger 30, where the hydrogen is heated. The hydrogen supply 26 then passes the hydrogen through the coolant-hydrogen heat exchanger 32, where the hydrogen is heated. The hydrogen supply 26 then passes the hydrogen through the recirculation heat exchanger 20, where the hydrogen is heated. The control valve 34 controls the flow of hydrogen through the hydrogen supply 26. After the control valve 34 the hydrogen supply 26 passes the hydrogen to the mixer 24. The hydrogen is a gas when it reaches the mixer 24. The temperature of the hydrogen after the mixer is between 0 and 95 degC.

The air supply system 36 passes air from the air supply 37 to the compressor 38. The compressor 38 compresses the air. A portion of the air is then sent to the environmental control system 44. The air supply system 36 passes the remaining air (i.e. that which does not go to the environmental control system 44) to the exhaust heat exchanger 49 before the air reaches the air-fuel heat exchanger 30. In the exhaust heat exchanger 49, the air is cooled. Cooling the air in this way may reduce the cooling requirement of the air-fuel heat exchanger 30.

In the air-fuel heat exchanger 30, the air passes heat to the hydrogen. The air is cooled in the air-fuel heat exchanger 30. The temperature of the air after the air-fuel heat exchanger 30 is between 0 and 95 degC.

The air supply system 36 passes the air to the fuel cell air inlet 42. The air supply system 36 supplies more than a stoichiometric requirement of air to the fuel cell air inlet 42 i.e. more air than is required to react with the hydrogen in the fuel cell 12. By providing more than the stoichiometric requirement of air to the fuel cell air inlet 42, delays in increasing the power generated by the hydrogen fuel cell 12 are reduced, as the there is no need to wait for the air supply system 36 to increase the air supplied to the hydrogen fuel cell 12 when more power is required.

The hydrogen fuel cell 12 chemically converts the hydrogen and air into water, generating electricity. Some hydrogen is not consumed by the hydrogen fuel cell 12 and as a result the fuel cell outputs excess hydrogen via the fuel cell hydrogen outlet 16. The hydrogen fuel cell 12 outputs air via the fuel cell air outlet 46.

The hydrogen recirculation system 18 passes excess hydrogen from the fuel cell hydrogen outlet 16 to the recirculation heat exchanger 20. In the recirculation heat exchanger 20 the excess hydrogen passes heat to the hydrogen in the hydrogen supply 26. The hydrogen recirculation system 18 then passes the excess hydrogen to the blower 22, which increases the pressure of the excess hydrogen. The blower 22 is downstream of the recirculation heat exchanger 20, as the blower 22 may be able to more efficiently pressurise cooler excess hydrogen.

The hydrogen recirculation system 18 then passes the excess hydrogen to the mixer 24, where the excess hydrogen is mixed with hydrogen from the hydrogen supply 26. The mixed excess hydrogen and hydrogen from the hydrogen supply 26 is then fed to the hydrogen fuel cell 12 via the fuel cell hydrogen inlet 14. The control valve 34 may vary the flow of hydrogen in the hydrogen supply 26 to vary the temperature of the hydrogen passed to the fuel cell hydrogen inlet 14.

The air exhaust system 44 passes excess air from the fuel cell air outlet 46 to the turbine 48, in which the excess air causes the turbine 48 to rotate. After the turbine 48 the air is heated in the exhaust heat exchanger 49, in which heat is passed from the air in the air supply system 36 to the exhaust air. After the exhaust air heat exchanger, the exhaust air may be used to produce thrust to drive the aircraft. Heating the exhaust air in the exhaust heat exchanger increases the density of the exhaust air, increasing the thrust.

The coolant system 50 recirculates coolant through the fuel cell 12 to cool the fuel cell. The coolant system 50 recirculates coolant through the motor 56 to cool the motor 56.

The coolant system 50 passes the coolant though the hydrogen heat exchanger 32, which passes heat from the coolant to the hydrogen in the hydrogen supply 26, thereby cooling the coolant. The coolant system 50 passes the coolant through the coolant heat exchanger 52, which passes heat from the coolant to ambient, thereby cooling the coolant.

The hydrogen fuel cell 12 powers the motor 56. The motor 56 and the turbine 48 rotate the compressor 38 and the propeller 54 via the mechanical linkage 60. The propeller 54 provides thrust to the aircraft.

Various aspects of the apparatus disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A power generation system for an aircraft, the power generation system comprising:
a hydrogen fuel cell comprising a fuel cell hydrogen inlet and a fuel cell hydrogen outlet; and
a hydrogen recirculation system configured to recirculate recirculation hydrogen from the fuel cell hydrogen outlet to the fuel cell hydrogen inlet.

2. A power generation system according to claim 1, wherein the hydrogen recirculation system comprises a mixer, wherein the mixer is configured to mix the recirculation hydrogen with input hydrogen from a hydrogen supply to produce mixed hydrogen, the mixer configured to supply the mixed hydrogen to the fuel cell hydrogen inlet.

3. A power generation system according to claim 1 or 2, wherein the recirculation system comprises a recirculation heat exchanger configured to cool the recirculation hydrogen.

4. A power generation system according to claim 3, wherein the recirculation heat exchanger is configured to use input hydrogen from a hydrogen supply to cool the recirculation hydrogen.

5. A power generation system according to any preceding claim and comprising a blower, wherein the blower is configured to increase a pressure of the recirculation hydrogen.

6. A power generation system according to claim 5 when dependent on claim 3, wherein the blower is downstream of the heat exchanger.

7. A power generation system according to any preceding claim and comprising an air supply system configured to supply air to the hydrogen fuel cell.

8. A power generation system according to claim 7, wherein the air supply system comprises a compressor configured to compress the air.

9. A power generation system according to claim 7 or 8, wherein the air supply system is configured to supply more than a stoichiometric requirement of air to the hydrogen fuel cell.

10. A power generation system according to any of claims 7 to 9, wherein the air supply system comprises an air-fuel heat exchanger, the air-fuel heat exchanger configured to use air to heat input hydrogen.

11. A power generation system according to any preceding claim and comprising a turbine, the turbine configured to generate work from air received from the hydrogen fuel cell.

12. A power generation system according to any preceding claim and comprising a coolant system, the coolant system configured to cool the hydrogen fuel cell.

13. A power generation system according to claim 12, wherein the coolant system comprises a coolant heat exchanger, the coolant heat exchanger configured to heat input hydrogen.

14. An aircraft comprising the power generation system of any preceding claim.

15. A method of generating power in an aircraft, the method comprising recirculating recirculation hydrogen from a fuel cell hydrogen outlet to a fuel cell hydrogen inlet.
